# EUROPEAN PATENT APPLICATION

(11) **EP 4 717 878 A1**
(43) Date of publication of application: **01.04.2026**
(21) Application number: 25202681.0
(22) Date of filing: 17.09.2025
(51) Int. Cl.: F01D 5/10, F01D 9/02, F01D 9/04, F01D 25/04, F01D 25/24, F02C 6/12

(54) **TURBINE HOUSING**

(30) Priority: 27.09.2024 WO PCT/CN2024/121802; 13.11.2024 GB 202416661
(71) Applicant: WUXI CUMMINS TURBO TECHNOLOGIES COMPANY LTD., Wuxi, Jiangsu 214028 (CN)
(72) Inventor: Hu, Wei, China, 214028 (CN); Xie, Guohong, China, 214028 (CN); Zou, Jiajun, China, 214028 (CN)
(74) Representative: Marks & Clerk Cummins

(57) **Abstract**

There is disclosed a turbine housing (15) for containing a turbine wheel (14) for rotation about a first axis (2). The turbine housing defines a turbine chamber (20). The turbine housing further defines a volute (19) which spirals radially inwards and extends from an inlet (40) to adjoin the turbine chamber. The turbine housing further defines a tongue (42) of the volute, the tongue radially separates a downstream portion (46) of the volute adjacent the turbine chamber from an upstream portion (48) of the volute adjacent the inlet of the volute. A distal portion (43) of the tongue comprises a plurality of recesses (50), the recesses having different profiles.

## Description

### Field of the invention

The present invention relates to a turbine housing. The turbine housing may form part of a turbocharger.

### Background of the invention

Turbines convert the potential energy of a fluid into mechanical work. Conventional turbines comprise a turbine housing defining a turbine inlet, a turbine chamber and a turbine outlet. A turbine wheel is mounted within the turbine chamber. The turbine inlet commonly comprises an annular gap defined between opposing surfaces arranged around the turbine chamber and a volute arranged around the annular inlet. In use, fluid enters the turbine through the turbine inlet, where it is passed to the turbine wheel in the turbine chamber. The fluid impinges upon one or more blades defined by the turbine wheel, thus exerting a force upon the turbine wheel causing the turbine wheel to spin. Once the fluid has passed the turbine wheel, it exits the turbine via a gas outlet.

Turbochargers are well known turbomachines for supplying air to an inlet of an internal combustion engine at pressures above atmospheric pressure (boost pressures). Turbochargers increase the pressure of atmospheric air entering into an internal combustion engine using a turbine and a compressor mounted to a common shaft. Exhaust gasses from an outlet manifold of the internal combustion engine are passed through the turbine. Rotation of the turbine wheel causes rotation of the shaft and thus the compressor wheel. Air is drawn through the compressor and compressed by the compressor wheel to a boost pressure. By providing higher pressure air to the internal combustion engine, more oxygen is available within the internal combustion engine for the combustion of fuel. As such, the turbocharger permits more fuel to be combusted, and hence the internal combustion engine may produce more power.

The turbocharger shaft is conventionally supported by journal and thrust bearings, including appropriate lubricating systems, located within a central bearing housing connected between the turbine and compressor wheel housings. After driving the turbine wheel, the exhaust gas exists the turbine through the gas outlet which is at the opposite end of the rotational axis of the turbine wheel from the bearing housing.

Because the turbine housing defining a volute is not ideal, due to design and/or manufacturing limitations, aerodynamic forces experienced by the turbine wheel have a non-uniform distribution dependent on the angular position of the turbine wheel. The aerodynamic forces can excite vibrational modes of the turbine wheel. In some cases, the resultant stresses can eventually cause turbine wheels to fail due to fatigue, shortening the turbine wheel lifetime.

It is an object of the present disclosure to provide a turbine housing which addresses one or more of the problems discussed above.

### Summary of the invention

According to a first aspect there is provided a turbine housing for containing a turbine wheel for rotation about a first axis: the turbine housing defining a turbine chamber; the turbine housing further defining a volute which spirals radially inwards and extends from an inlet to adjoin the turbine chamber; and the turbine housing further defines a tongue of the volute, the tongue radially separating a downstream portion of the volute adjacent the turbine chamber from an upstream portion of the volute adjacent the inlet of the volute; wherein a distal portion of the tongue comprises a plurality of recesses, the recesses having different profiles.

A plurality of recesses having different profiles allows the reduction of excitation strain amplitude across multiple vibrational modes. Advantageously, reduced strain results in a more reliable turbine within which the turbine wheel is longer-lasting and less likely to fail through fatigue.

The term profile may be interpreted as meaning the outline defined by a recess in a plane perpendicular to the axial direction. Examples of different profiles may include different shapes of recesses and may include recesses with the same shape, but offset relative to each other.

The plurality of recesses may have different depths.

The depth difference between the recesses may be 0.1mm or more.

The plurality of recesses may be adjacent.

One of the plurality of recesses may be wholly contained within another of the plurality of recesses.

The plurality of recesses may define a stepped cross-section.

The term 'stepped' indicates that transition surfaces between one recess to another recess extend in a generally radial direction.

The plurality of recesses may have a curved profile.

The recesses may be arcuate, with arc axes parallel with the first axis.

The plurality of recesses may be disposed at a face of the tongue adjacent the downstream portion of the volute.

The tongue may comprise two recesses.

The tongue may comprise three, four, five or more recesses

According to a second aspect there is provided a turbine comprising the turbine housing according to the first aspect and further comprising a turbine wheel, contained in the turbine housing. The turbine housing may comprise any of the optional features above.

The turbine may be a fixed geometry turbine.

According to a third aspect there is provided a turbomachine comprising a turbine according to the second aspect. The turbine may comprise any of the optional features above.

The turbomachine may be a turbocharger.

According to a fourth aspect there is provided a method of manufacturing a turbine housing for containing a turbine wheel for rotation about a first axis; the turbine housing defining a turbine chamber; the turbine housing further defining a volute which spirals radially inwards and extends from a respective inlet to adjoin the turbine chamber; and the turbine housing further defines a tongue of the volute, the tongue radially separating a downstream portion of the volute adjacent the turbine chamber from an upstream portion of the volute adjacent the inlet of the first volute; wherein the method comprises: forming a plurality of recesses into a distal portion of the volute tongue, the recesses having different depths.

The plurality of recesses may be formed by machining.

Machining may comprise of one or more of: rotary cutting, electrical-discharge machining or electro-chemical machining.

The plurality of recesses may be formed by casting and/or 3D-printing.

Features disclosed in relation to one aspect may be combined with any other aspect.

### Brief description of the drawings

A non-limiting embodiment of the invention will now be described, for the sake of example only, with reference to the following figures, in which:
Fig. 1 is a cross-sectional drawing of a turbocharger according to an embodiment of the present invention;
Fig. 2 shows a radial cross-section of a turbine housing of a turbine of the turbocharger of Fig. 1;
Fig. 3 shows a cross-sectional view of a tongue of the turbine housing shown in Fig. 2;
Fig 4A shows a perspective view of the tongue of the turbine housing shown in Figs. 2 and 3;
Fig 4B shows a cutaway view of the tongue of the turbine housing shown in Figs. 2, 3 and 4A;
Fig 5A schematically illustrates an alternative tongue geometry according to an embodiment of the present invention;
Fig 5B schematically illustrates another alternative tongue geometry according to an embodiment of the present invention; and
Fig 5C schematically illustrates a further alternative tongue geometry according to an embodiment of the present invention.

### Detailed description

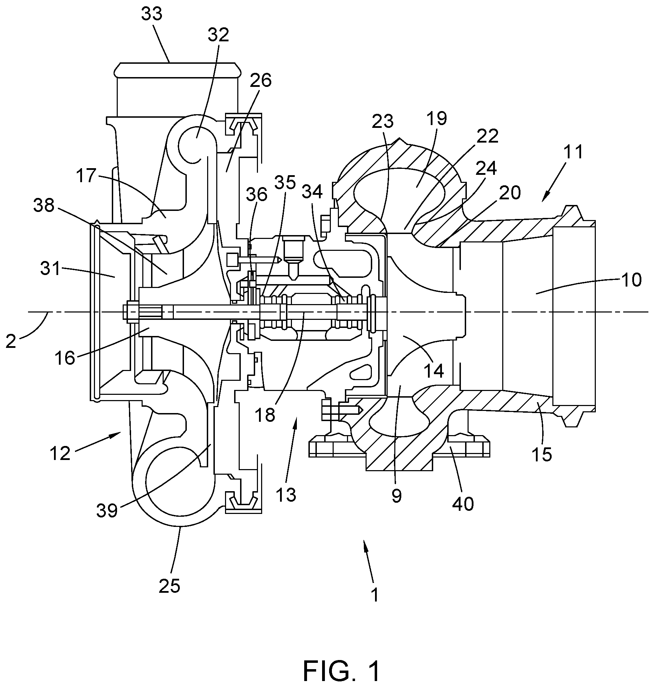

Figure 1 shows a schematic axial cross-section through a turbocharger 1 according to an embodiment of the invention. The turbocharger 1 comprises a turbine 11 joined to a compressor 12 via a central bearing housing 13. The turbine 11 comprises a turbine wheel 14 for rotation within a turbine housing 15. The turbine wheel 14 has a rotational axis 2 (in the plane of the diagram) and blades 9. Similarly, the compressor 12 comprises a compressor wheel 16 (or "impeller"). The compressor wheel 16 can rotate within a compressor housing 17. The compressor housing 17 defines a compressor chamber 38. The compressor chamber 38 is largely filled by the compressor wheel 16, and the compressor wheel 16 can rotate within the compressor chamber. The turbine wheel 14 and compressor wheel 16 are mounted on opposite ends of a common turbocharger shaft 18 which extends through the central bearing housing 13. The turbocharger shaft 18 is rotatably supported by a bearing assembly in the bearing housing 13. The bearing assembly comprises two journal bearings 34 and 35 housed towards the turbine end and compressor end respectively of the bearing housing 13. The bearing assembly further includes a thrust bearing 36. Other bearing assemblies may be used.

The turbine housing 15 has an exhaust gas volute 19, located annularly around the turbine wheel 14, and an axial exhaust gas outlet 10.

The compressor housing 17 has an axial air intake passage 31 and a volute 32 arranged annularly around the compressor chamber 38. The volute 32 is in gas flow communication with a compressor outlet 33. The compressor chamber 38 is connected to the volute 32 by a radially-extending diffuser space 39 (also referred to here as a "diffuser"). The diffuser 39 is a gap between a radially-extending shroud surface 25 of the housing 17, and a radially extending hub surface 26 of the bearing housing 13. The diffuser 39 is rotationally symmetric about the rotational axis 2 of the shaft 18.

In use, exhaust gas is provided to the exhaust gas volute 19 (via an inlet 40) from an exhaust manifold (also referred to as an outlet manifold) of the engine (not shown in Figure 1) to which the turbocharger is attached. The exhaust gas exits the volute 19 into a turbine chamber 20 through an annular gap 22 defined between bearing housing-side surface 23 and an opposite surface 24 which are opposing surfaces arranged around the turbine chamber 20. The turbine chamber 20 contains a turbine wheel 14. Thus, the exhaust gas passes from the exhaust gas volute 19 to the exhaust gas outlet 10 via a turbine wheel 14, which is rotated by the exhaust gas. In some variants, the opposite surface 24 may be provided as a surface of the bearing housing or some other component, instead of being a surface of the turbine housing 15.

The turbine wheel 14 in turn rotates the rotationally-coupled compressor wheel 16 which thereby draws intake air through the compressor inlet 31 and delivers boost air to an inlet manifold of the engine via the diffuser 39, the volute 32 and then the outlet 33.

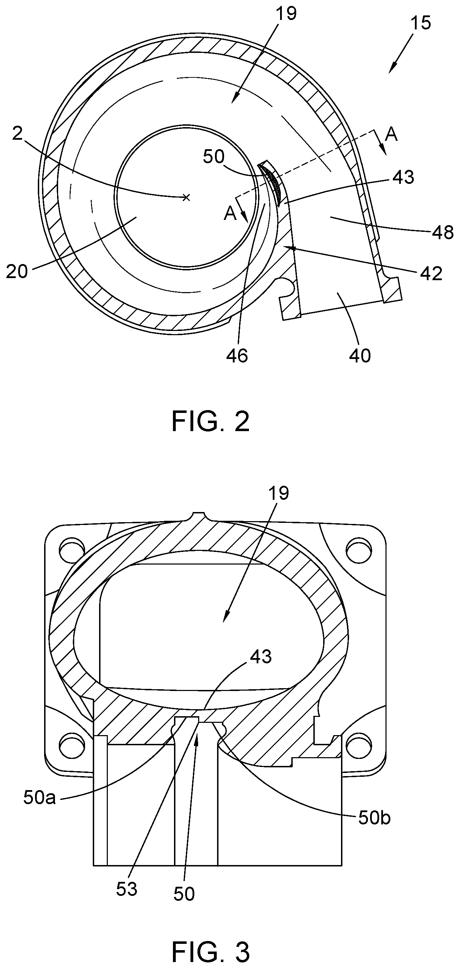

A radial section of the turbine housing 15 is shown in Figure 2. The shape of the exhaust gas volute 19 (henceforth simply 'the volute' unless otherwise specified) can be clearly seen. The volute 19 spirals radially inward relative to the rotational axis 2 (which may be referred to as the first axis). The volute extends from the inlet 40 to adjoin the turbine chamber 20. The turbine housing 15 further defines a volute tongue 42. The tongue 42 radially separates a downstream portion 46 of the volute adjacent the turbine chamber from an upstream portion 48 of the volute adjacent the inlet 40 of the volute. A distal portion 43 of the tongue comprises two recesses 50, each having a different depth.

Figure 3 which shows a cut-away view of the volute 19 taken at section A-A (as shown in Figure 2). The two recesses 50 comprise a first recess 50a and a second recess 50b, the recesses having a different depth. The first and second recesses 50a, 50b are adjacent to each other. The recesses are disposed at a face of the tongue 42 adjacent the downstream portion 46 of the volute 19. The first and second recesses 50a, 50b define a stepped cross-section. Put alternatively, transition surfaces 53 between one recess to another recess extend in a generally radial direction - this is also true for other embodiments described below.

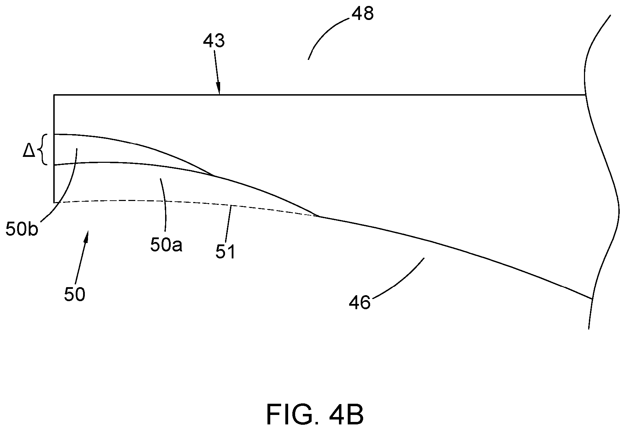

The first and second recesses 50a, 50b are arcuate (best seen in Figure 4B). The arc axes may be parallel with, but offset from, the rotational axis 2.

The radii of the arcuate recesses 50a, 50b may be different from each other. Alternatively, the radii of the arcuate recesses 50a, 50b may be the same. For example, the arcuate recesses may have the same radii, but have arc axes which are offset from each other. Put alternatively, the arcuate recesses may have the equal radii, but be disposed at different depths.

In general, the arcuate recesses may have arc axes offset from each other. For example, the arcuate recesses may be circumferentially offset and/or disposed at different depths.

In other embodiments, the tongue may comprise any plurality of recesses.

Generally, the recesses may have different profiles. The term profile may be interpreted as meaning the outline defined by a recess in a plane perpendicular to the axial direction. Examples of different profiles may include different shapes of recesses and may include recesses with the same shape, but offset relative to each other. Recesses having different depths are an example of recesses having different profiles.

In some embodiments the recesses may be formed by machining the turbine housing. The recesses may be machined by rotary cutting. For example, machining may comprise overlapping cuts made with one or more rotary cutting tools (e.g. fly cutters, gear cutters, side cutters or woodruff cutters). Electrical discharge machining or electro-chemical machining may also be used to form the recesses. Alternatively, the recesses may be part of the turbine housing casting and/or 3D-printed.

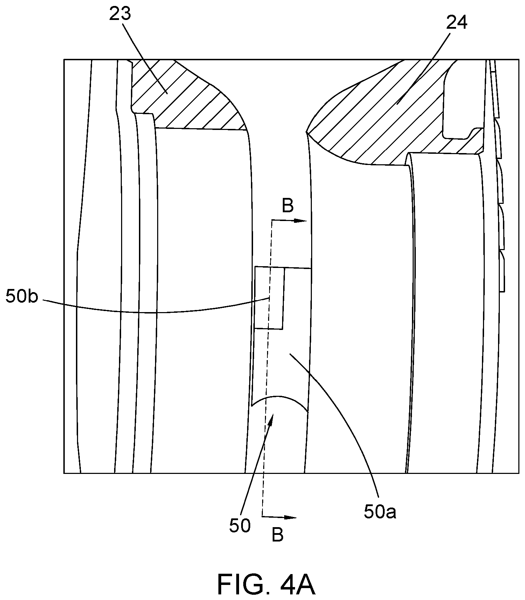

Figure 4A shows a perspective view towards the face of the tongue 42 adjacent the downstream portion 46 of the volute 19. The second recess 50b is smaller in extent than the first recess 50a. The proximal end of the second recess 50b terminates a shorter distance from a distal edge of the tongue 42 than proximal end of the first recess 40a. The second recess 50b is disposed such that it is within the broader footprint of the first recess 50a toward the bearing housing-side surface 23. Alternatively, the second recess 50b may be disposed toward the opposite surface 24.

Fig 4B shows an alternate cutaway view of the distal end 43 of tongue 42, taken at section B-B (as shown in Figure 4A). The difference in depth between the first and second recesses 50a, 50b is indicated by Δ. The arcuate profiles of the first and second recesses 50a, 50b are apparent. The first recess 50a does not form a continuous profile with the wider distal end 43 of tongue 42.

The natural continuous curve of the tongue distal end 43 defines a datum 51. The datum 51 corresponds with the profile the tongue 42 would have if no recesses were present. The volute 19 has a generally inward-spiraling shape. The datum 51 is a continuation of the inward spiral of the volute 19. The term 'recess' may be understood as indicating a volume set back from the datum. The depth of a recess indicates the depth relative to the datum 51.

It has been found that producing a turbine with a tongue comprising a plurality of recesses (e.g. first and second recesses 50a, 50b) results in a turbine in which the turbine wheel experiences less strain relative to a turbine with an un-recessed tongue or a tongue having only a single recess. Reduced strain results in a more reliable turbine within which the turbine wheel is less likely to fail through fatigue.

Without wishing to be bound by theory, the reasoning for the reduction in strain experienced by the turbine wheel of a turbine according to the present invention is discussed below.

In use, there is a conflict at the distal portion 43 of the tongue 42 between incoming exhaust gas entering via the inlet 40 and gas that has reached the end of the volute circuit (i.e. the downstream portion 46). In an ideal case, the pressure exerted on the turbine wheel by exhaust gas as a function of angular position around the turbine wheel would be uniform. Put alternatively, the pressure distribution would be uniform. However, in practice, the confluence of gas flows induces a turbulence proximate to the distal portion 43 of the tongue 42. The turbulence corresponds to a pressure peak in the pressure distribution.

This turbulence and resulting aerodynamic forces (including the pressure peak) near the distal portion 43 of the tongue 42 can excite certain vibrational modes of the turbine wheel. In some turbines it is possible for a turbine wheel operating at a particular speed to have one or more of its blades, having a particular resonant frequency, excited by the aerodynamic forces. The greater the amplitude of the excitation, the greater the strain exerted by the exhaust gas on the blades of the turbine wheel. Too much strain exerted on the blades of the turbine wheel over time can result in the blades of the turbine wheel becoming deformed (e.g. suffering from metal fatigue) and, in extreme cases, in blades of the turbine wheel fracturing - and hence catastrophic failure of the turbine.

Certain vibrational modes may be sensitive to excitation by turbulent flow patterns from certain tongue geometries. Multiple tongue geometries from a plurality of recesses having different profiles (e.g. recesses having different depths) allow modification of the excitation behaviour. A plurality of recesses allows the reduction of excitation strain amplitude across multiple vibrational modes. This may allow extension of the turbine wheel's lifetime.

The embodiment described above with reference to Figures 2-4, is an illustrative example of the present disclosure. Alternative embodiments are also possible.

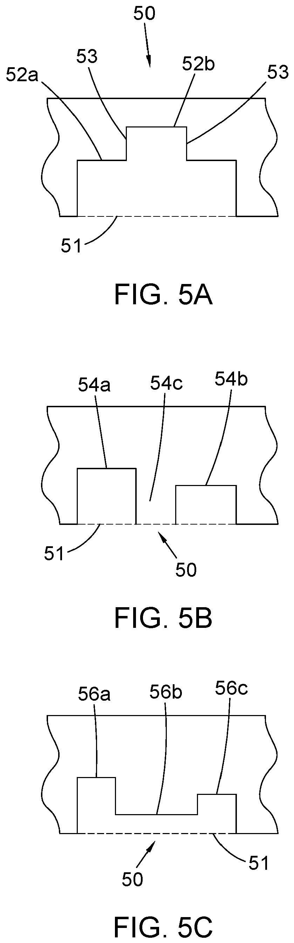

In some embodiments one of the plurality of recesses is wholly contained within another, as shown in Figure 5A. Figure 5A is a schematic cross-section of an alternative tongue recess geometry. The plurality of recesses 50 comprises a first recess 52a and a second recess 52b, wherein the second recess is wholly contained within the larger first recess. The first and second recesses 52a, 52b define a stepped cross-section with transition surfaces 53.

Alternatively, the recesses may be separated from each other, as shown in Figure 5B. Figure 5B is a schematic cross-section of an alternative tongue recess geometry. The plurality of recesses 50 comprises a first recess 54a and a second recess 54b, wherein the first and recesses are disposed separately (i.e. they are not adjacent). The first recess 54a and the second recess 54b are separated by a wall 54c which has zero depth relative to the datum 51.

Further, whilst the above-described recess tongue geometries comprise two recesses, the tongue may comprise three, four, five or more recesses, depending on the specific configuration of the turbine wheel and projected operating conditions. As an example, Figure 5C schematically illustrates a tongue recess geometry where the plurality of recesses 50 comprises a first recess 56a, a second recess 56b, and a third recess 56c. The first, second and third recesses 56a-b are adjacent. The first, second and third recesses 56a-b each have different depths relative to the datum 51.

In general, the depth difference between recesses is related to the overall size of the turbine. The depth difference between recesses may be 0.1mm or more. The recesses are sized such that the minimum thickness of the tongue is at least 30% of the thickness defined by the datum 51 at the tongue tip, in order to provide sufficient structural resilience at the tongue. Preferably, the recesses are sized such that the minimum thickness of the tongue is at least 40% of the thickness defined the by datum 51 at the tongue tip, in order to provide further structural resilience at the tongue.

Although arcuate recesses are specified above, different types of profiles can be used. For example, the plurality of recesses may be curved (e.g. ovoid) or straight-profiled (e.g. angled slots). The plurality of recesses may be circumferentially offset from each other or have different depths (i.e. the recesses may be radially offset from each other).

Although stepped recesses are specified above, different shapes can be used. In an alternative, the transitions between different depths from one recess to another recess may be substantially continuous and/or comprise one or more radii.

In the above-described embodiments the turbine housing has a single volute. In alternative embodiments the turbine housing may comprise a first volute and a second volute (i.e. a twin entry turbine housing). For example, the first and second volutes may be divided in a substantially axial direction (e.g. by a substantially radial dividing wall). In such an embodiment, the turbine housing may have a tongue of the first volute, the distal end comprising a first plurality of recesses having different depths. In addition, the turbine may have a tongue of the second volute, the distal end comprising a second plurality of recesses having different depths for the second volute.

Whilst not illustrated or mentioned in relation to the above-described embodiments, the turbine may optionally further comprise a wastegate or a variable geometry mechanism.

Although one or more of the embodiments above are described in relation to Figure 1, the person skilled in the art will appreciate that the present disclosure relates primarily to features of the turbine housing and that any detail regarding the compressor and bearing assembly is purely illustrative. A turbine or turbine housing according to the present invention may also be used in conjunction with any appropriate bearing and/or compressor arrangement.

In light of the above, a turbine housing according to the present invention provides a way in which to reduce the strain on the blades of a turbine. This in turn improves the operating lifetime of the turbine.

Although the invention has been described in relation to a turbine which may form part of a turbocharger, in other embodiments the turbine may form part of any appropriate turbomachine.

## Claims

1. A turbine housing for containing a turbine wheel for rotation about a first axis:
the turbine housing defining a turbine chamber;
the turbine housing further defining a volute which spirals radially inwards and extends from an inlet to adjoin the turbine chamber; and
the turbine housing further defines a tongue of the volute, the tongue radially separating a downstream portion of the volute adjacent the turbine chamber from an upstream portion of the volute adjacent the inlet of the volute;
wherein a distal portion of the tongue comprises a plurality of recesses, the recesses having different profiles.

2. The turbine housing of claim 1, wherein the plurality of recesses have different depths.

3. The turbine housing of claim 2 wherein the depth difference between the recesses is 0.1mm or more.

4. The turbine housing of claim 1, 2 or 3 wherein the plurality of recesses are adjacent.

5. The turbine housing of any preceding claim wherein one of the plurality of recesses is wholly contained within another of the plurality of recesses.

6. The turbine housing of any preceding claim wherein the plurality of recesses defines a stepped cross-section.

7. The turbine housing of any preceding claim wherein the plurality of recesses have a curved profile.

8. The turbine housing of claim 7 wherein the plurality of recesses are arcuate, with arc axes parallel with the first axis.

9. The turbine housing of any preceding claim wherein the plurality of recesses are disposed at a face of the tongue adjacent the downstream portion of the volute.

10. The turbine housing of any preceding claim wherein the tongue comprises two recesses.

11. A turbine comprising the turbine housing of any preceding claim and further comprising a turbine wheel, contained in the turbine housing;wherein optionally, the turbine is a fixed geometry turbine.

12. A turbomachine comprising a turbine according to claim 11;wherein optionally the turbomachine is a turbocharger.

13. A method of manufacturing a turbine housing for containing a turbine wheel for rotation about a first axis;
the turbine housing defining a turbine chamber;
the turbine housing further defining a volute which spirals radially inwards and extends from a respective inlet to adjoin the turbine chamber; and
the turbine housing further defines a tongue of the volute, the tongue radially separating a downstream portion of the volute adjacent the turbine chamber from an upstream portion of the volute adjacent the inlet of the first volute;
wherein the method comprises:
forming a plurality of recesses into a distal portion of the volute tongue, the recesses having different depths.

14. The method of claim 13 wherein the plurality of recesses is formed by machining wherein optionally; machining comprises of one or more of: rotary cutting, electrical-discharge machining or electro-chemical machining.

15. The method of claim 13 wherein the plurality of recesses is formed by casting and/or 3D-printing.
